# EUROPÄISCHE PATENTANMELDUNG

(11) **EP 0 943 561 A2**
(43) Veröffentlichungstag der Anmeldung: **22.09.1999**
(21) Anmeldenummer: 99105563.3
(22) Anmeldetag: 18.03.1999
(51) Int. Cl.: B65G 1/137

(54) **Kommissionierverfahren und Kommissioniereinrichtung für Handelsware**

(30) Priorität: 18.03.1998 DE 19811724; 03.12.1998 DE 29821629 U
(71) Anmelder: SIEMENS AKTIENGESELLSCHAFT, 80333 München (DE)
(72) Erfinder: Gronimus, Kerstin, Dipl.-Ing., 91058 Erlangen (DE)

(57) **Zusammenfassung**

Bei einem Logistiksystem für Handelsware erfolgt das Kommissionieren der Artikel manuell und automatisch. Die automatische Kommissioniereinrichtung (AKL) ist so bemessen, daß ihr Durchsatz kleiner ist als das gesamte Kommissioniervolumen an normalen Arbeitstagen, so daß an solchen Tagen alle langsam laufenden Artikel automatisch kommissioniert werden. Die automatische Kommissioniereinrichtung (AKL) kommissioniert die Artikel aufsteigend von den Artikeln mit geringster Abgabemenge, bis die volle Leistungsfähigkeit der automatischen Einrichtung erreicht ist. Die anderen Artikel, d.h. die Schnelläufer, werden manuell kommissioniert. Ein Erhöhen der Kommissionierleistung an Spitzentagen erfolgt ausschließlich durch Verstärkung der manuellen Kommissionierleistung.

## Beschreibung

Die Erfindung bezieht sich zum einen auf ein Kommissionierverfahren für aus verschiedenen Artikeln bestehende Handelsware, wobei entsprechend in einer Datenverarbeitungsanlage vorliegenden Kommissionieraufträgen die Artikel über einen Wareneingang mit ersten Warenträgern einem Kommissionierlager zum manuellen Kommissionieren zugeführt werden und wobei die kommissionierte Ware auf zweiten Warenträgern an einen Warenausgang geleitet wird.

Zum anderen bezieht sich die Erfindung auf eine Kommissioniereinrichtung für aus verschiedenen Artikeln bestehende Handelsware, wobei entsprechend in einer Datenverarbeitungsanlage vorliegenden Kommissionieraufträgen die Artikel über einen Wareneingang mit ersten Warenträgern einem Kommissionierlager zum manuellen Kommissionieren zuführbar sind und wobei die Kommissionierware auf zweiten Warenträgern an einen Warenausgang leitbar ist.

Derartige Kommissionierverfahren und Kommissioniereinrichtungen für Handelsware sind bereits seit längerer Zeit üblich. Während dabei der Nachschub der Artikel häufig automatisch erfolgt, wird der Vorgang des Kommissionierens ausschließlich manuell abgewickelt. Eine vollständige Automatisierung des manuellen Kommissionierens würde jedoch folgendes Problem mit sich bringen.

Die gesamte Anlage müßte auf die tägliche Spitzenleistung, die innerhalb eines Planjahres auftreten könnte, ausgelegt werden. Im Handel muß jedoch davon ausgegangen werden, daß Spitzen bis zu 80% über der durchschnittlichen Leistung auftreten. Das bedeutet aber andererseits, daß außerhalb der Spitzenzeiten die automatische Kommissionieranlage nur mit einem Bruchteil ihrer Leistungsfähigkeit genutzt wird.

Demzufolge wird im Handel bislang auf ein vollautomatisches Kommissionieren, was im industriellen Bereich - bei gleichbleibendem Durchsatz - durchaus geläufig ist, bislang verzichtet.

Aufgabe der Erfindung ist es, ein Kommissionierverfahren und eine Kommissioniereinrichtung der eingangs genannten Art so auszubilden, daß eine weitgehende Automatisierung des Kommissionierens ermöglicht ist, wobei die automatischen Anlagenteile möglichst hohe Betriebszeiten aufweisen.

Gemäß der Erfindung wird diese Aufgabe für ein Verfahren der eingangs genannten Art dadurch gelöst, daß parallel zum manuellen Kommissionierlager ein automatisches Kommissionierlager vorgesehen ist, dessen Tagesdurchsatzleistung etwa gleich oder kleiner ist als der an Durchschnittstagen zum Kommissionieren anstehende Durchsatz und daß die Aufteilung der Kommissionieraufträge so erfolgt, daß beginnend bei den langsamst laufenden Artikeln zu den schnellst laufenden Artikeln hin dem automatischen Kommissionierlager Kommissionieraufträge bis zum Erreichen der vollen Leistung des automatischen Kommissionierlagers gegeben werden und daß nur der verbleibende Auftragsrest an das manuelle Kommissionierlager gegeben wird.

Für eine Kommissioniereinrichtung der eingangs genannten Art wird diese Aufgabe dadurch gelöst, daß parallel zum manuellen Kommissionierlager ein automatisches Kommissionierlager vorgesehen ist, dessen Tagesdurchsatzleistung etwa gleich oder kleiner ist als der an Durchschnittstagen zum Kommissionieren anstehende Durchsatz und daß die Aufteilung der Kommissionieraufträge so erfolgt, daß beginnend bei den langsamst laufenden Artikeln zu den schnellst laufenden Artikeln hin dem automatischen Kommissionierlager Kommissionieraufträge bis zum Erreichen der vollen Leistung des automatischen Kommissionierlagers vergebbar sind und daß nur der verbleibende Auftragsrest an das manuelle Kommissionierlager gebbar ist.

Eine erste vorteilhafte Ausbildung des erfindungsgemäßen Verfahrens ist dadurch gekennzeichnet, daß die Tagesdurchsatzleistung des automatischen Kommissionierlagers etwa dem Durchsatz an langsam laufenden Artikel entspricht und ebenso ist eine erste Ausbildung der erfindungsgemäßen Einrichtung dadurch gekennzeichnet, daß die Tagesdurchsatzleistung des automatischen Kommissionierlagers etwa dem Durchsatz an langsam laufenden Artikeln entsprechend ist.

Von den Erfindern ist dabei erkannt worden, daß schnellaufende Artikel vom Kommissionierpersonal manuell sehr zügig gegenüber langsam laufenden Artikeln kommissioniert werden können. Als Richtzahlen mögen dabei folgende Werte dienen: 80 bis 100 Ladeeinheiten pro Stunde bei langsam laufenden Artikeln und 300 bis 400 Ladeeinheit pro Stunde bei schnellaufenden Artikeln. Ferner muß im Regelfall davon ausgegangen werden, daß im Artikelspektrum sowieso auch Artikel vorkommen, die nicht automatisch kommissionierbar sind und daß demzufolge immer ein gewisser Personalbestand für manuelles Kommissionieren vorhanden ist.

Eine weitere vorteilhafte Ausbildung des erfindungsgemäßen Kommissionierverfahrens bzw. der erfindungsgemäßen Kommissioniereinrichtung ist dadurch gekennzeichnet, daß ankommissionierte Artikel auf den ersten Warenträgern, insbesondere bei wechselnder Auftragslage, vom manuellen Kommissionierlager in das automatische Kommissionierlager oder vice versa verfahren werden können bzw. daß ankommende Artikel auf den ersten Warenträgern, insbesondere bei wechselnder Auftragslage, vom manuellen Kommissionierlager in das automatische Kommissionierlager oder vice versa verfahrbar sind.

So kann es zweckmäßig sein, daß am Ende eines jeden Tages ankommissionierte Paletten im manuellen Bereich für den automatischen Transport gesichert werden. Diese Artikel stehen dann wieder dem Gesamtsystem - also auch dem automatischen Teil - zur Verfügung, so daß am Folgetag alle Artikel bedarfsweise automatisch kommissioniert werden können. Pro Artikel würde dann nur eine Anbruchpalette vorliegen. Muß FIGO (First In, First Out) eingehalten werden, was im Lebensmittelbereich notwendig ist, so ist Voraussetzung, daß das automatische Kommissioniersystem keinen eigenen Artikelvorrat anlegt, sondern Anbruchpaletten in das Reservelager zurücklagert. Muß FIFO nicht eingehalten werden, so besteht diese Einschränkung nicht, solange genügend Bestand an Artikeln vorhanden ist, die sowohl manuell als auch automatisch kommissioniert werden. Da sich der Überlappungsbereich zwischen manueller und automatischer Kommissionierung jedoch regelmäßig im Bereich der Schnelläufer oder zumindest der schnellsten Langsamläufer findet, dürfte dies im allgemeinen kein Problem darstellen.

Ein Ausführungsbeispiel der Erfindung ist in der Zeichnung dargestellt und wird im folgenden näher erläutert. Dabei zeigen:
- FIG 1: eine erste ABC-Kurve,
- FIG 2: zwei weiterer ABC-Kurven und
- FIG 3: ein Blockschaubild.

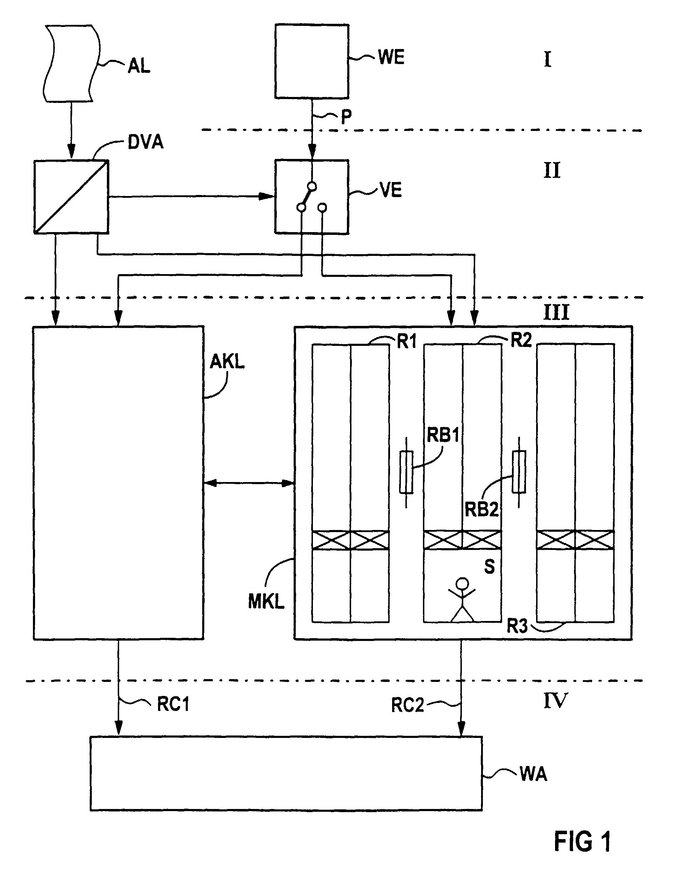

In der Darstellung gemäß FIG 1 ist eine sogenannte ABC-Kurve gezeigt, die den Durchsatz eines Kommissioniersystems abhängig von den verschiedenen Artikeln angibt. Gestrichelt ist dabei angedeutet, daß dann, wenn 20% der Artikel kommissioniert worden sind, bereits 80% des Durchsatzes erreicht ist. Die übrigen 80% Artikel erhöhen den Durchsatz dann nur noch von 80% auf 100%. Die Artikel unterhalb der 20%-Grenze werden als Schnelläufer bezeichnet, wobei es dabei extreme Schnelläufer, (durch AA bezeichnet) und übliche Schnelläufer (durch A bezeichnet) gibt. Die anderen Artikel werden als Langsamläufer LL bezeichnet, wobei es auch hierbei zwei Geschwindigkeitsklassen gibt, wobei mit B die relativ schnellen Langsamläufer LL und mit C die relativ langsamen Langsamläufer LL bezeichnet sind.

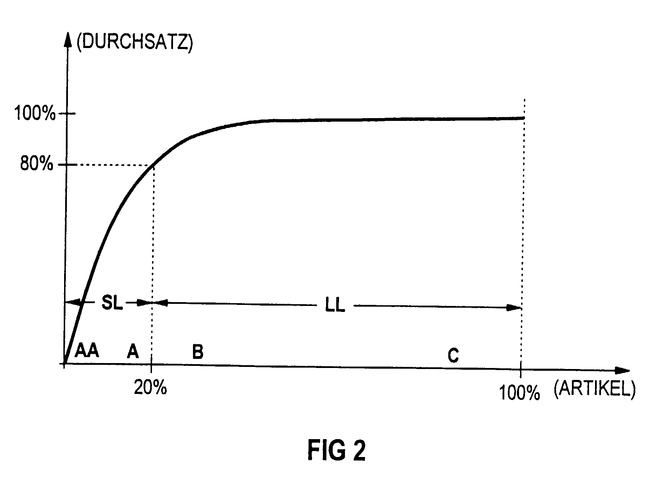

In der Darstellung gemäß FIG 2 ist eine ABC-Kurve 1 für den durchschnittlichen Tagesdurchsatz eines Kommissioniersystems angedeutet und mit einer Kurve 2 ist gezeigt, daß dieser durchschnittliche Tagesdurchsatz an Spitzentagen von 100% auf 180% erhöht sei. Wenn nun bei der Auslegung des Kommissionierens davon ausgegangen wird, daß an normalen Tagen 10% der Artikel, d.h. nur schnelle Schnelläufer, manuell kommissioniert werden und 90% der Artikel automatisch kommissioniert werden, wird bei diesem Ansatz 50% des Durchsatzes manuell und 50% automatisch kommissioniert.

Ausgehend von der Überlegung, daß die Einrichtungen zur automatischen Kommissionierung dort eingesetzt werden, wo sie den größten Nutzen bringen, wird nun bei der Erfindung an Tagen mit Spitzendurchsatz eine solche Artikelzuweisung an die automatische Kommissioniereinrichtung gegeben, daß gerade von den langsamst laufenden Artikeln zu den schneller laufenden Artikeln hin die Kommissionieraufträge solange an die automatische Kommissioniereinrichtung gegeben werden, bis deren volle Leistungsgrenze erreicht ist. Es zeigt sich im Schaubild, daß damit der Durchsatzbereich von 180% bis 130% abgedeckt ist, welcher der Artikelbandbreite von 100% bis 16% entspricht. Der Schnelläuferanteil von 0 bis 16%, der einen Durchsatz von 130% bedingt, muß dann an solchen Spitzentagen manuell kommissioniert werden. Im Ausführungsbeispiel ist dabei ein relativ hoher Automatisierungsgrad angenommen worden, es wäre durchaus auch möglich, eine bedarfsweise Variation der Parameter vorzunehmen.

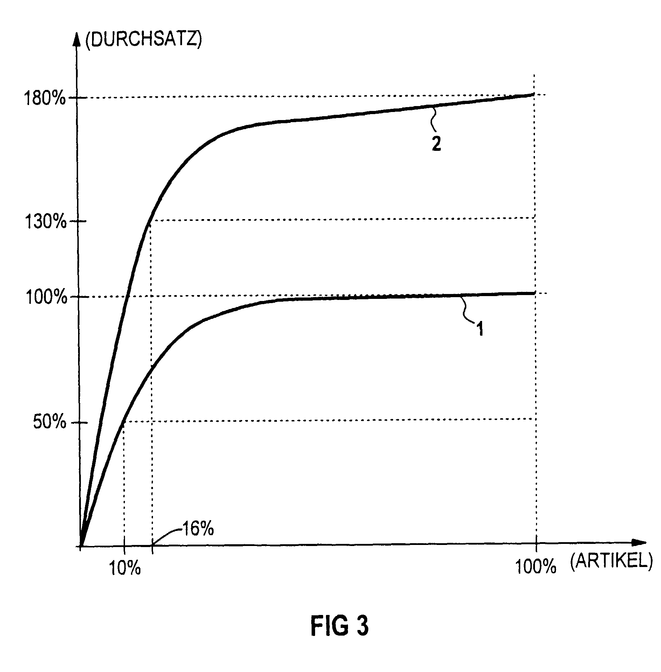

In der Darstellung gemäß FIG 3 ist in Form eines Blockschaubildes gezeigt, daß Artikel aus einem Warenlager WE sozusagen in einem Palettenstrom PT an eine Verteileinrichtung VE gelangen. Wie die Waren zu kommissionieren sind, möge einer Auftragsliste AL entnehmbar sein, die einer Datenverarbeitungsanlage DVA zugeleitet wird. Diese steuert dann die Verteileinrichtung VE, so daß die Paletten entweder in ein automatisches Kommissionierlager AKL oder in ein manuelles Kommissionierlager MKL gelangen. Von der Datenverarbeitungsanlage DVA werden ferner die für das automatische Kommissionierlager AKL und das manuelle Kommissionierlager MKL resultierenden Kommissionieraufträge elektronisch bzw. listenweise zugeführt. Das manuelle Kommissionierlager MKL ist der Übersichtlichkeit halber nur abschnittsweise dargestellt und so sind nur Regalreihen R1 bis R3 gezeigt, zwischen denen Regalbediengeräte RB1 und RB2 verfahrbar sind. Einige Fächer der Regalreihen R1 bis R3 sind jeweils durch Kreuze angedeutet. Wesentlich ist nun, daß dieses Reservelager, das als normales Palettenhochregal mit seinen automatischen Regalbediengeräten RB1 und RB2 ausgebildet ist, in einer unteren Ebene ein Stollenkommissionierlager aufweist, bei dem in der Darstellung nur ein Stollen S gezeigt ist. In diesen Stollen würde dann vom Bedienpersonal das manuelle Kommissionieren vorgenommen. Manuell kommissioniert würden je nach Auftragslage an Spitzentagen Schnellstläufer und Schnelläufer, eventuell auch bei entsprechender Auslegung relativ schnelle Langsamläufer. Dies geschieht deswegen, weil ausgehend vom Artikel mit der kleinsten Angabemenge in der Datenverarbeitungsanlage alle Abgangsmengen zusammenaddiert werden, bis der maximale Durchsatz des automatischen Kommissionierlagers AKL erreicht wird. Das manuelle Kommissionierlager MKL und das automatische Kommissionierlager AKL sind zweckmäßig baulich vereinigt.

Die manuell kommissionierten Artikel können beispielsweise über Rollcontainer RC2 in den Warenausgang WA gelangen.

Alle im automatischen Kommissionierlager AKL automatisch kommissionierten Artikel, d.h. insbesondere die Langsamläufer, werden von dort über Rollcontainer RC1 an den Warenausgang WA weitergeleitet.

Durch einen Doppelpfeil zwischen dem automatischen und dem manuellen Kommissionierlager AKL und MKL sei angedeutet, daß beispielsweise ankommissionierte Paletten zwischen beiden Lagern ausgetauscht werden können. Ebenso ist es auch möglich, daß quantisierte Artikelmengen, sozusagen als Teilpaletten zwischen beiden Lagern austauschbar sind.

Durch römische Ziffern I bis IV sei noch angedeutet, daß prinzipiell ein Wareneingangsbereich I vorhanden ist, wo beispielsweise über Lastwagen Ware eintreffen kann, wobei sich an diesen Bereich ein automatischer Verteilbereich II für die Warenträger, insbesondere die Paletten, anschließt. Auf diesen Bereich folgt ein Kommissionierbereich III, der gemischt automatisch und manuell ausgebildet ist und an diesen Bereich schließt sich ein Warenausgangsbereich IV für den Abtransport der kommissionierten Ware an.

## Patentansprüche

1. Kommissionierverfahren für aus verschiedenen Artikeln bestehende Handelsware, wobei entsprechend in einer Datenverarbeitungsanlage vorliegenden Kommissionieraufträgen die Artikel über einen Wareneingang mit ersten Warenträgern einem Kommissionierlager zum manuellen Kommissionieren zugeführt werden und wobei die kommissionierte Ware auf zweiten Warenträgern an einen Warenausgang geleitet wird, **dadurch gekennzeichnet,** daß parallel zum manuellen Kommissionierlager (MKL) ein automatisches Kommissionierlager (AKL) vorgesehen ist, dessen Tagesdurchsatzleistung etwa gleich oder kleiner ist als der an Durchschnittstagen zum Kommissionieren anstehende Durchsatz und daß die Aufteilung der Kommissionieraufträge (AL) so erfolgt, daß beginnend bei den langsamst laufenden Artikeln (LL) zu den schnellst laufenden Artikeln (SL) hin dem automatischen Kommissionierlager (AKL) Kommissionieraufträge bis zum Erreichen der vollen Leistung des automatischen Kommissionierlagers (AKL) gegeben werden und daß nur der verbleibende Auftragsrest an das manuelle Kommissionierlager (MKL) gegeben wird.

2. Kommissionierverfahren nach Anspruch 1, **dadurch gekennzeichnet,** daß die Tagesdurchsatzleistung des automatischen Kommissionierlagers (AKL) etwa dem Durchsatz an langsam laufenden Artikel (LL) entspricht.

3. Kommissionierverfahren nach Anspruch 1 oder 2, **dadurch gekennzeichnet,** daß ankommissionierte Artikel auf den ersten Warenträgern (P), insbesondere bei wechselnder Auftragslage, vom manuellen Kommissionierlager (MKL) in das automatische Kommissionierlager (AKL) oder vice versa verfahren werden können.

4. Kommissioniereinrichtung für aus verschiedenen Artikeln bestehende Handelsware, wobei entsprechend in einer Datenverarbeitungsanlage vorliegenden Kommissionieraufträgen die Artikel über einen Wareneingang mit ersten Warenträgern einem Kommissionierlager zum manuellen Kommissionieren zuführbar sind und wobei die kommissionierte Ware auf zweiten Warenträgern an einen Warenausgang leitbar ist, **dadurch gekennzeichnet,** daß parallel zum manuellen Kommissionierlager (MKL) ein automatisches Kommissionierlager (AKL) vorgesehen ist, dessen Tagesdurchsatzleistung etwa gleich oder kleiner ist als der an Durchschnittstagen zum Kommissionieren anstehende Durchsatz und daß die Aufteilung der Kommissionieraufträge (AL) so erfolgt, daß beginnend bei den langsamst laufenden Artikeln (LL) zu den schnellst laufenden Artikeln (SL) hin dem automatischen Kommissionierlager (AKL) Kommissionieraufträge bis zum Erreichen der vollen Leistung des automatischen Kommissionierlagers (AKL) vergebbar sind und daß nur der verbleibende Auftragsrest an das manuelle Kommissionierlager (MKL) gebbar ist.

5. Kommissioniereinrichtung nach Anspruch 4, **dadurch gekennzeichnet,** daß die Tagesdurchsatzleistung des automatischen Kommissionierlagers (AKL) etwa dem Durchsatz an langsam laufenden Artikel (LL) entsprechend ist.

6. Kommissionierverfahren nach Anspruch 3 oder 4, **dadurch gekennzeichnet,** daß ankommissionierte Artikel auf den ersten Warenträgern (P), insbesondere bei wechselnder Auftragslage, vom manuellen Kommissionierlager (MKL) in das automatische Kommissionierlager (AKL) oder vice versa verfahrbar sind.
